# EUROPÄISCHE PATENTSCHRIFT

(11) **EP 1 464 518 B1**
(45) Veröffentlichungstag und Bekanntmachung des Hinweises auf die Patenterteilung: **09.01.2008**
(21) Anmeldenummer: 04007147.4
(22) Anmeldetag: 25.03.2004
(51) Int. Cl.: B60C 23/04

(54) **Vorrichtung zur Verbindung mit einer Felge und Felge mit einer solchen Vorrichtung**
Device for connection to a rim and rim with such a device
Dispositif de connexion avec une jante et jante comportant un tel dispositif

(30) Priorität: 04.04.2003 DE 10316705
(43) Veröffentlichungstag der Anmeldung: 06.10.2004
(73) Patentinhaber: Beru Aktiengesellschaft, 71636 Ludwigsburg (DE)
(72) Erfinder: Schulze, Gunter Lothar, 75228 Ispringen (DE)
(74) Vertreter: Twelmeier Mommer & Partner

(56) Entgegenhaltungen:
- WO-A-03/011617
- DE-A1- 3 629 956
- US-A- 5 801 340

## Beschreibung

Die Erfindung geht aus von einer Vorrichtung mit den im Oberbegriff des Anspruches angegebenen Merkmalen. Eine solche Vorrichtung ist aus der WO 03/011617 A1 bekannt. Es handelt sich dabei um eine Vorrichtung, welche insbesondere zum Bestimmen und Signalisieren einer an der Vorrichtung auftretenden Beschleunigung, des Luftdruckes und/oder der Temperatur in einem auf der Felge montierten Luftreifen dient. Eine solche Vorrichtung, nachfolgend auch als Radsensor bezeichnet, bestimmt den Luftdruck, Beschleunigungswerte und/oder die Temperatur im allgemeinen in vorgegebenen Zeitabständen und übermittelt sie in vorgegebenen Zeitabständen, welche gleich oder größer sein können als die Zeitabstände zwischen den Messungen, oder beim Überschreiten von Grenzwerten, sofort per Funk an ein Empfangs- und Auswertegerät, welches sich in einem Fahrzeug befindet, das Räder hat, welche mit einem solchen Radsensor ausgestattet sind. Da der Radsensor vom Luftreifen abgedeckt ist, kann man ihn von außen nicht sehen. Eine Sichtprüfung, ob er korrekt befestigt ist oder sich im Laufe der Zeit von der Felge gelöst hat, ist nicht möglich. Zwar ist ein Lösen des Radsensors so gut wie ausgeschlossen, wenn er in bekannter Weise mit dem Reifenventil verschraubt ist. Das Verschrauben des Radsensors mit dem Reifenventil ist jedoch nachteilig, weil dazu ein besonders ausgebildetes Reifenventil benötigt wird, welches teurer ist als ein herkömmliches Reifenventil, und weil man weiterhin für die Befestigung eine durchbohrte Spezialschraube benötigt, welche ebenfalls teuer ist. Es gibt deshalb Überlegungen, Radsensoren auf andere Weise an der Felge zu befestigen, zum Beispiel durch Verkleben. Bei Auswahl eines geeigneten Klebers und bei Einhalten gewisser Randbedingungen, wie zum Beispiel hinreichend große Klebeflächen und deren sorgfältige Vorbereitung für den Klebevorgang, kann eine Klebeverbindung unter den Bedingungen des Fahrbetriebes hinreichend zuverlässig und langlebig sein. Gleichwohl ist es sinnvoll, sich Gedanken darüber zu machen, wie erkannt werden kann, wenn sich ein Radsensor doch einmal von der Felge lösen sollte. Er würde dann durch die beim Fahren auftretende Fliehkraft gegen die Innenseite des Reifens geschleudert und bei schnellerer Fahrt dort verbleiben bzw. bei langsamer Fahrt unkontrolliert im Reifen wandern können, was nach einiger Zeit zu einer Beschädigung oder Zerstörung des Radsensors und/oder des Reifens führen kann.

Die WO 03/011617 A1 schlägt daher vor, physikalische Größen, die von dem Radsensor ohnehin regelmäßig gemessen werden, nämlich am Radsensor auftretende Beschleunigungen und/oder die Temperatur, daraufhin zu untersuchen, ob die Messwerte eine Information enthalten, aufgrund derer auf ein Ablösen des Radsensors von der Felge geschlossen werden kann. Die WO 03/011617 A1 schlägt vor, die Temperatur zu beobachten, weil diese im Reifen deutlich ortsabhängig sei. Die am Radsensor auftretende Beschleunigung zu beobachten, wird in der WO 03/011617 deshalb vorgeschlagen, weil sie sich bei einem Lösen des Radsensors von der Felge in einer atypischen Weise ändern kann. Nachteilig dabei ist, dass Änderungen der Temperatur und der Beschleunigung nicht nur auftreten, wenn sich der Radsensor von der Felge löst, sondern bei fest verankertem Radsensor auch in Abhängigkeit von der Fahrweise, vom Straßenzustand und vom Bewegungszustand des Fahrzeuges. So wird man ein kurz nach Fahrtbeginn erfolgendes Ablösen des Radsensors von der Felge nicht anhand einer Temperaturmessung feststellen können. Bei Beobachtung der Beschleunigungssignale kann es schwierig sein, atypische Beschleunigungen von Beschleunigungen zu unterscheiden, welche infolge des Fahrbetriebes wechseln. Es kann ferner schwierig sein, bei schneller Fahrt ein stabiles Beschleunigungssignal, welches von einem Radsensor stammt, welcher sich von der Felge gelöst hat und nun durch Fliehkraft an der Innenseite des Reifens "klebt", als atypisch zu erkennen. Die aus der WO 03/011617 bekannten Vorschläge können deshalb sowohl zu einem Fehlalarm als auch dazu führen, dass ein Ablösen eines Radsensors von der Felge nicht so rechtzeitig erkannt wird, dass Schäden vermieden werden.

Aus der US 5,801,340 ist ein kapazitiver Näherungssensor bekannt, der zum Erkennen von in seinem Wirkungsbereich befindlichen Objekten eingesetzt wird. Wenn sich ein Objekt im Wirkungsbereich des Näherungssensors befindet, dann verändert sich der Kapazitätswert des Näherungssensors und es wird ein Signal ausgegeben oder das Ausfuhren einer Aktion veranlasst. Die Auswertung erfolgt über eine entsprechende Auswerteelektronik mit einem Colpitts-Oszillator. Als bevorzugter Einsatzbereich werden Anwendungen im Automobilbereich angegeben, z. B. um zu verhindem, dass ein Objekt in einem sich motorisch schließenden Seitenfenster eingeklemmt wird.

Der vorliegenden Erfindung liegt die Aufgabe zugrunde, einen Weg aufzuzeigen, wie ein eventuelles Ablösen eines Radsensors von der Felge zuverlässiger und mit möglichst wenig Aufwand festgestellt werden kann.

Diese Aufgabe wird gelöst durch eine Vorrichtung mit den im Patentanspruch 1 angegebenen Merkmalen und durch eine Felge mit den im Patentanspruch 19 angegebenen Merkmalen. Vorteilhafte Weiterbildungen der Erfindung sind Gegenstand der Unteransprüche.

Eine erfindungsgemäße Vorrichtung, nachfolgend auch als Radsensor bezeichnet, hat einen auf die Felge ansprechenden Näherungssensor. Das hat wesentliche Vorteile:
■ Ein Näherungssensor kann eindeutig zwischen einem mit der Felge verbundenen Radsensor und einem abgelösten Radsensor unterscheiden.
   ◆ Temperatur, Fahrweise und am Radsensor auftretende Beschleunigungen nehmen dem Ausgangssignal des Näherungssensors nicht seine Eindeutigkeit.
   ◆ Ein Näherungssensor kann ohne Schwierigkeiten als zusätzlicher Sensor in einen herkömmlichen Radsensor integriert werden.
   ◆ Das elektrische Ausgangssignal des Näherungssensors kann mit der im Radsensor ohnehin vorhandenen Einrichtung zum Signalisieren (Funksender) zusammen mit den übrigen von dem Radsensor zu bestimmenden Messwerten von physikalischen Größen wie Luftdruck, Temperatur und Zentrifugalbeschleunigung oder Bahnbeschleunigung drahtlos an ein im Fahrzeug vorgesehenes Empfangs- und Auswertegerät übermittelt werden.
   ◆ Im Radsensor ohnehin vorgesehene Komponenten wie Batterie, Funksender, Antenne, Schaltungsträgerplatte, integrierter Schaltkreis (Mikroprozessor oder ASIC) können für die Ausbildung und den Betrieb des Näherungssensors mitbenutzt werden, so dass für seine Verwirklichungein nur geringer zusätzlicher Aufwand entsteht.

Grundsätzlich ist es möglich, einen Näherungssensor zu verwenden, welcher in einer vorgegebenen Montageposition des Radsensors die Felge unmittelbar berühit. Zuverlässiger und preiswerter ist es jedoch, als Näherungssensor einen solchen zu verwenden, welcher berührungslos auf die Felge anspricht.

Es wird bevorzugt, dass der Näherungssensor nicht kontinuierlich betrieben wird, sondern dass eine Zeitschaltung vorgesehen ist, welche den Näherungssensor in vorgegebenen zeitlichen Abständen aktiviert, weil das den Stromverbrauch limitiert und im Falle einer Stromversorgung durch eine Batterie eine lange Lebensdauer ohne Batteriewechsel ermöglicht. Besonders bevorzugt ist es, den Näherungssensor gleichzeitig mit einem der übrigen Sensoren zu aktivieren, welche in der Vorrichtung enthalten sind, insbesondere gleichzeitig mit einem Drucksensor, welcher den Luftdruck im Reifen mißt. Das stellt sicher, dass in den für die Kontrolle vorgesehenen zeitlichen Abständen, die von den Forderungen an die Fahrsicherheit orientiert sind, nicht nur der Luftdruck kontrolliert wird, sondern auch die Position des Radsensors. Außerdem können dann die ermittelten Messwerte für Luftdruck, Temperatur, Beschleunigung und das Signal des Näherungssensors in einem gemeinsamen Datentelegramm stromsparend übermittelt werden.

Als Näherungssensoren eignen sich für Zwecke der Erfindung vor allem kapazitive und induktive Sensoren. Ein kapazitiver Näherungssensor kann dadurch gebildet werden, dass in dem Radsensor eine erste Kondensatorelektrode ausgebildet und so angeordnet wird, dass sie in der vorgegebenen Montageposition des Radsensors der Oberfläche der Felge dicht gegenüber liegt, so dass die Felge als zweite Kondensatorelektrode wirkt, welche zusammen mit der ersten Kondensatorelektrode einen Kondensator bildet, dessen Kapazität sich stark ändert, wenn der Radsensor von der Felge abfallen sollte. Besonders günstig ist es, einen Näherungssensor mit zwei Kondensatoren auszubilden, von denen jede in dem Radsensor eine erste Elektrode hat und beide die Felge als gemeinsame Koppelelektrode nutzen. Diese Ausführungsform hat den Vorteil, dass man auch ohne eine direkte elektrische Verbindung zwischen dem Radsensor und der Felge wohldefinierte elektrische Potentiale auf den Elektroden der Kondensatoren des Näherungssensors erhält.

Ist der Näherungssensor ein induktiver Sensor, dann sieht man in dem Radsensor zweckmäßigerweise eine Induktivität, zum Beispiel eine elektrische Spule vor, welche in dem Radsensor so angeordnet ist, dass sie in der vorgegebenen Montageposition des Radsensors besonders nahe bei der Oberfläche der Felge liegt. Das hat zur Folge, dass der induktive Widerstand der Spule dann, wenn sich der Radsensor in seiner vorgegebenen Montageposition befindet, deutlich größer ist als wenn er sich von der Felge gelöst hat und sich in größerem Abstand vom Felgenbett aufhält..

Besonders bevorzugt ist eine Ausführungsform der Erfindung, in welcher der Näherungssensor einen auf die Felge ansprechenden elektrischen Schwingkreis enthält. Ein solcher Schwingkreis kann auf unterschiedliche Weise nutzbringend ausgebildet und eingesetzt werden, indem man entweder einen oder mehrere im Schwingkreis vorgesehene Kondensatoren oder eine oder mehrere im Schwingkreis vorgesehene Spulen oder beides so im Radsensor anordnet, dass sie in seiner vorgegebenen Montageposition möglichst nahe bei der Oberfläche der Felge liegen, so dass diese einen deutlich messbaren Einfluß auf die Kapazität, auf die Induktivität oder auf beides und damit auf das Verhalten des Schwingkreises ausübt. Verglichen mit einem Radsensor, welcher sich von der Felge gelöst hat, ist bei einem Radsensor, welcher sich in seiner vorgegebenen Montageposition befindet, die Eigenfrequenz des Schwingkreises infolge der Nähe der Felge zu einer Spule zu deutlich niedrigeren Frequenzen verschoben und die Amplitude der Schwingung deutlich gedämpft oder sogar vollständig unterdrückt. Beeinflußt man anstelle einer Spule einen Kondensator des Schwingkreises durch die Nähe der Felge, dann ist auch in diesem Fall die Frequenz des Schwingkreises zu niedrigeren Frequenzen verschoben, wenn sich der Radsensor in seiner vorgegebenen Montageposition befindet, wohingegen die der kapazitive Widerstand zunimmt, wenn sich der Radsensor von der Felge löst.

Zum Erkennen einer Änderung des Verhaltens des Schwingkreises ist zweckmä-ßigerweise eine Detektorschaltung vorgesehen, zum Beispiel eine solche, welche ein Spannungssignal abgibt, dessen Höhe ein Maß für die Amplitude der Schwingung, für ihre Dämpfung, für ihre Frequenz oder Frequenzänderung ist, je nach dem, wie der Schwingkreis ausgelegt und angeordnet ist. Eine andere Möglichkeit besteht darin, zu überprüfen, ob nach einer kurzzeitigen Anregung des Schwingkreises überhaupt und gegebenenfalls mit welcher Verzögerung eine Schwingung als Antwortsignal entsteht.

Bekannte Radsensoren beinhatten einen Mikroprozessor oder ASIC. Dessen Systemtakt kann mit Vorteil dazu herangezogen werden, die Frequenz des Schwingkreises zu überwachen, denn eine Frequenzmessung kann auf eine Zeitmessung zurückgeführt werden. Ein zusätzlich apparativer Aufwand wird deshalb für die Frequenzmessung nicht benötigt. Es ist aber auch möglich, eine Detektorschaltung zu verwenden, welche ein Tiefpaßfilter, Hochpaßfilter oder ein Bandpaßfilter enthält, deren Grenzfrequenzen so gewählt werden, dass sie zwischen den beiden Zuständen "Radsensorposition in Ordnung" und "Radsensor abgefallen" eine Unterscheidung dadurch erlauben, dass eine im Schwingkreis angeregte Schwingung in einem der beiden Zustände durchgelassen wird, in dem anderen Zustand jedoch nicht.

Eine vorteilhafte Möglichkeit, eine relevante Änderung im Verhalten des Schwingkreises zu erkennen, besteht darin, einen zusätzlichen Kondensator vorzusehen, welcher vom Schwingkreis gespeist wird, und weiterhin einen Schwellwertdetektor vorzusehen, welcher den Ladezustand des zusätzlichen Kondensators überwacht, wobei der Schwellwertdetektor ein Signal abgeben soll, wenn der Ladezustand des Kondensators einen Schwellenwert überschreitet. Ist der Schwingkreis durch die Nähe der Felge stark gedämpft, kann er einen niederohmigen Ladepfad für den zusätzlichen Kondensator darstellen, so dass dieser den Schwellwertdetektor zum Ansprechen bringen kann. Fällt der Radsensor jedoch von der Felge ab, wird der Schwingkreis zu einem hochohmigen Ladepfad für den zusätzlichen Kondensator, so dass dieser nicht mehr bis auf den vorgegebenen Schwellenwert aufgeladen werden kann. Zur Erzielung aussagekräftiger Ergebnisse ist in diesem Fall der zusätzliche Kondensator vor jedem Messvorgang durch einen Reset-Vorgang zu entladen.

Ausführungsbeispiele der Erfindung sind in den beigefügten schematischen Zeichnungen dargestellt:
- Figur 1: zeigt einen Radialschnitt durch ein luftbereiftes Fahrzeugrad mit einer Felge und mit einem Radsensor, welcher mit dem Felgenbett verbunden ist,
- Figur 2: zeigt eine Schrägansicht des Gehäuses einer erfindungsgemäßen Vorrichtung, in welcher die Lage einer Schaltungsträgerplatte dargestellt ist,
- Figur 3: zeigt eine Blockdarstellung einer erfindungsgemäßen Vorrichtung im Zusammenhang mit einer Felge, und
- Figur 4: zeigt ein Schaltungsbeispiel einer erfindungsgemäßen Vorrichtung.

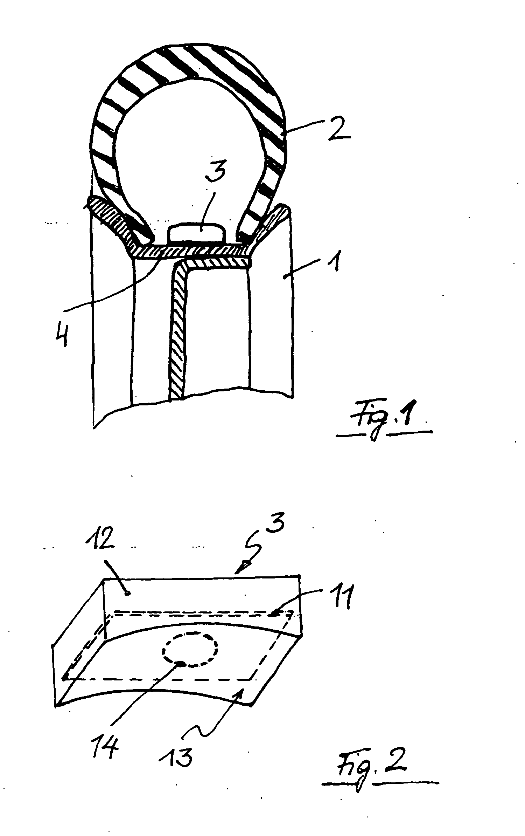

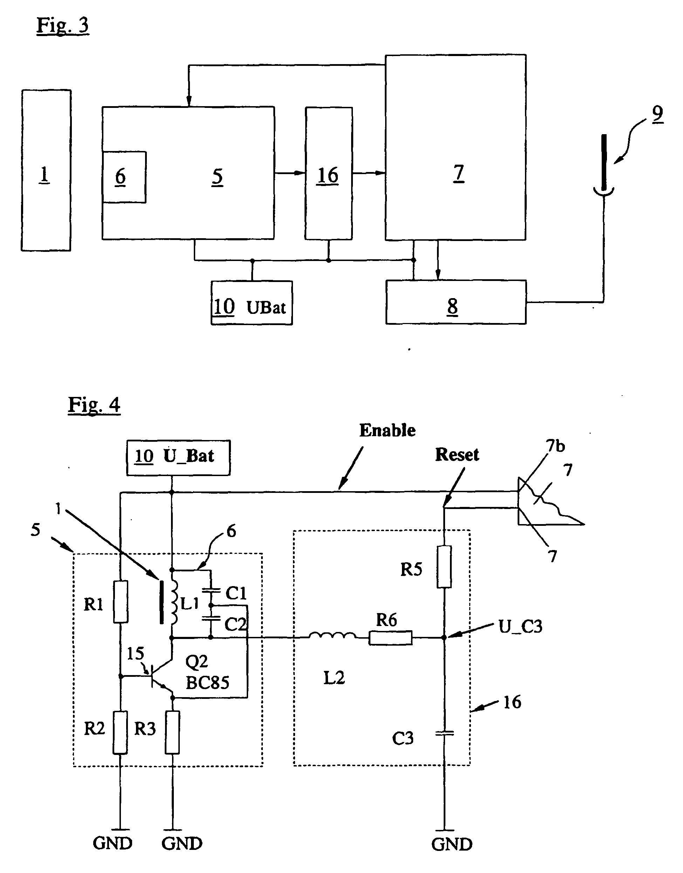

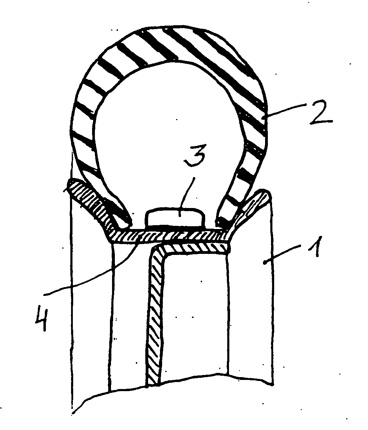

Figur 1 zeigt ein Rad mit einer Felge 1 aus Metall, insbesondere aus Stahl oder Aluminium. Auf der Felge 1 ist ein Luftreifen 2 montiert. Unter dem Luftreifen 2 ist ein Radsensor 3 vorgesehen, welcher auf dem Felgenbett 4 befestigt ist, zum Beispiel durch Verkleben. Der Radsensor 3 dient vornehmlich zum Überwachen des Luftdrucks im Reifen 2 und enthält zu diesem Zweck einen Drucksensor, vorzugsweise auch einen Temperatursensor und einen Beschleunigungssensor, eine Steuerschaltung, welche mit einem Mikroprozessor oder einem ASIC ausgerüstet ist, sowie eine Einrichtung zum Signalisieren der gewonnenen Messdaten mit einem Funksender und einer Antenne. Die gewonnenen Messdaten werden digital kodiert, mit einer den Radsensor 3 kennzeichnenden Kennung versehen und in einem Datenbus an ein im Fahrzeug vorgesehenes Empfangs- und Auswertegerät gefunkt. Die Energie für den Radsensor 3 kommt zweckmäßigerweise aus einer Batterie 10, siehe Figuren 3 und 4, könnte aber auch von außen durch einen Abfragesender (Transponder) eingesfrahlt werden.

Die Blockdarstellung in Figur 2 zeigt einen Ausschnitt aus den Bestandteilen eines solchen Radsensors mit den wesentlichen Bestandteilen der erfindungsgemäßen. Vorrichtung. Insbesondere enthält der Radsensor einen Oszillator 5 und als Bestandteil des Oszillators einen Schwingkreis 6, welcher sich in der vorgegebenen Montageposition des Radsensors 3, wie in Figur 1 dargestellt, in unmittelbarer Nähe der Felge 1 befindet, welche den Schwingkreis 6 beeinflußt und deshalb in Figur 2 ebenfalls als Block dargestellt ist. Zum Überwachen des Verhaltens des Oszillators 5 ist ein Detektorschaltkreis 16 vorgesehen, dessen Eingang mit dem Ausgang des Oszillators 5 verbunden ist. Außerdem enthält der Radsensor 3 einen integrierten Schaltkreis 7, insbesondere einen ASIC oder Mikroprozessor. Einem der Eingänge des integrierten Schaltkreises 7 wird das Ausgangssignal des Detektorschaltkreises 16 zugeführt, welches im integrierten Schaltkreis 7 nach vorgegebenen Kriterien analysiert und bewertet wird, um festzustellen, ob das Detektorausgangssignal anzeigt, dass der Radsensor 3 sich in seiner vorgegebenen Position an der Felge 1 befindet, oder ob er von der Felge 1 abgefallen ist. Der integrierte Schaltkreis 7 steuert ferner einen Funksender 8 mit Antenne 9, damit dieser das Ergebnis der Bewertung des Detektorausgangssignals an das im Fahrzeug vorgesehene Empfangs- und Auswertegerät übermittelt. Läßt das Detektorausgangssignal erkennen, dass der Radsensor 3 von der Felge 1 abgefallen ist, wird der Funksender 8 sofort aktiviert und die Nachricht an das Empfangs- und Auswertegerät gesendet. Andernfalls genügen gelegentliche Übermittlungen eines okay-Signales an das Empfangs- und Auswertegerät, um diesem mitzuteilen, dass die erfindungsgemäße Vorrichtung zur Überwachung der Lage des Radsensors an der Felge 1 funktioniert.

Der integrierte Schaltkreis 7 kontrolliert auch die weiteren im Radsensor 3 vorgesehenen Sensoren zum Beispiel für Druck, Temperatur, Beschleunigung und nach Bedarf auch Sensoren für andere physikalischen Größen, bewertet sie gegebenenfalls und veranlasst ihre Übermittlung an das im Fahrzeug vorgesehene zentrale Empfangs- und Auswertegerät.

Zur Stromversorgung der Komponenten des Radsensors ist eine Batterie 10 vorgesehen.

Der integrierte Schaltkreis 7 gibt einen Zeittakt vor, in welchem der Oszillator kurzzeitig angestoßen wird. Ob dann eine Schwingung entsteht und welche Frequenz, Amplitude und Dämpfung sie hat, hängt dann davon ab, ob sich der Schwingkreis 6 in seiner vorgegebenen Montageposition nahe bei der Felge 1 in dessen Einflußbereich befindet oder nicht. Das zu erkennen ist Aufgabe des Detektorschaltkreises 16, dessen Ausgangssignal vom integrierten Schaltkreis 7 ausgewertet wird. Damit in der vorgegebenen Einbaulage des Radsensors 3, wie zum Beispiel in Figur 1 dargestellt, der Einfluß der Felge 1 auf den Schwingkreis 6 möglichst groß ist, soll der Schwingkreis 6 oder wenigstens eine sein Verhalten maßgeblich bestimmende Komponente (eine Kapazität oder eine Induktivität) möglichst nahe bei der Oberfläche der Felge 1 angeordnet sein. Das kann man dadurch erreichen, dass man die frequenzbestimmende Komponente auf der Unterseite einer Schaltungsträgerplatte 11 vorsieht, welche im Gehäuse 12 des Radsensors 3 möglichst dicht an der Gehäuseunterseite 13 liegt, welche zur Anpassung an die Krümmung des Felgenbettes 4 mit entsprechender Krümmung konkav ausgebildet sein kann. Die Zone 14 auf der Schaltungsträgerplatte 11, in welcher sich das von der Felge 1 zu beeinflussende frequenzbestimmende Bauteil des Schwingkreises 6 befindet, ist am besten dort angeordnet, wo der Abstand der Schaltungsträgerplatte 11 von der Gehäuseunterseite 13 am geringsten ist, wie in Figur 3 dargestellt.

Die Figur 4 zeigt ein stärker detailliertes Ausführungsbeispiel der in Figur 2 dargestellten Schaltung, von welcher Figur 4 einen Ausschnitt zeigt. Der Oszillator 5 ist als Colpitts-Oszillator ausgebildet; es handelt sich dabei um einen Transistor-Oszillator mit einer Emitter-Schwingschaltung, welche sich durch einen besonders einfachen Aufbau auszeichnet. Sie enthält einen Schwingkreis 6 mit einer Induktivität L1 und zwei Kapazitäten C1 und C2, welcher über einen Transistor 15 in Emitterschaltung gespeist wird. Die Basis des Transistors 15 wird über einen aus den Widerständen R1 und R2 bestehenden Spannungsteiler vom integrierten Schaltkreis 7 angesteuert. Zwischen dem Emitter des Transistors 15 und Masse liegt ein Widerstand R3. Die Induktivität der Spule L1 wird durch die in ihrer Nähe liegende Felge 1 beeinflußt Der Ausgang des Oszillators 5 ist mit dem Eingang des des Detektorschaltkreises 16 verbunden. Das Ausgangssignal des Oszillators 5 speist über eine Spule L2 und einen Widerstand R6 einen Kondensator C3, dessen Spannung zwischen R6 und C3 abgegriffen und über einen Widerstand R5 einem Anschluß 7a des integrierten Schaltkreises 7 zugeführt wird, in welchem die Spannung einen Schaltvorgang auslösen kann, wenn sie einen vorgegebenen Wert erreicht. Befindet sich der Radsensor 3 in seiner vorgegebenen Einbaulage, wird der Schwingkreis 6 durch die Felge 1 stark gedämpft, so dass er, wenn er vom integrierten Schaltkreis 7 über dessen Anschluß 7b angestoßen wird, nicht oder bei verhältnismäßig niedriger Frequenz schwingt. In diesem Zustand kann er einen niederohmigen Ladepfad für den Kondensator C3 darstellen, so dass dessen Spannung die vorgegebene Schwelle erreicht und im integrierten Schaltkreis 7 einen Schaltvorgang auslösen kann. Ist der Radsensor 3 jedoch von der Felge 1 abgefallen, wird der Schwingkreis 6 für den Kondensator C3 ein hochohmiger Ladepfad, so dass dieser die vorgegebene Spannung, die zu einem Schaltvorgang im integrierten Schaltkreis 7 führen würde, nicht erreicht. In diesem Fall aktiviert die integrierte Schaltung 7 den Funksender 8, so dass dieser ein Warnsignal aussendet. Zeitgleich mit dem Anstoßen des Schwingkreises 6 gibt der integrierte Schaltkreis 7 über seinen Anschluß 7a ein Reset-Signal ab, welches den Kondensator C3 entlädt und damit für einen erneuten Ladevorgang über den Oszillator 5 vorbereitet.

### Bezugszahlenliste:

- 1.: Felge
- 2.: Luftreifen
- 3.: Radsensor
- 4.: Felgenbett
- 5.: Oszillator
- 6.: Schwingkreis
- 7.: integrierter Schaltkreis
- 7a.: Anschluß
- 7b.: Anschluß
- 8.: Funksender
- 9.: Antenne
- 10.: Batterie
- 11.: Schaltungsträgerplatte
- 12.: Gehäuse
- 13.: Gehäuseunterseite
- 14.: Zone
- 15.: Transistor
- 16.: Detektorschaltkreis

## Patentansprüche

1. Vorrichtung zur Verbindung mit einer Felge (1) an einer Stelle, welche unter einem auf der Felge (1) montierten Luftreifen liegt,
welche einen Sensor zum Bestimmen und Signalisieren einer physikalischen Größe enthält und es erlaubt, ein Lösen ihrer Verbindung mit der Felge zu erkennen,
**dadurch gekennzeichnet, dass** sie als weiteren Sensor einen auf eine Felge (1) ansprechenden Näherungssensor hat.

2. Vorrichtung nach Anspruch 1, **dadurch gekennzeichnet, dass** sie einen berührungslos auf die Felge (1) ansprechenden Näherungssensor hat.

3. Vorrichtung nach Anspruch 1 und 2, **dadurch gekennzeichnet, dass** eine Zeitschaltung vorgesehen ist, welche in vorgegebenen zeitlichen Abständen ein den Näherungssensor aktivierendes Signal liefert.

4. Vorrichtung nach Anspruch 3, **dadurch gekennzeichnet, dass** die Zeltschaltung das aktivierende Signal gleichzeitig an einen Sensor zum Bestimmen der physikalischen Größe liefert.

5. Vorrichtung nach Anspruch 4, **dadurch gekennzeichnet, dass** die physikalische Größe der Luftdruck oder die Temperatur im Luftreifen oder eine Beschleunigung ist.

6. Vorrichtung nach einem der vorstehenden Ansprüche, **dadurch gekennzeichnet, dass** der Näherungssensor ein kapazitiv arbeitender Sensor ist.

7. Vorrichtung nach Anspruch 6, **dadurch gekennzeichnet, dass** sie eine elektrische Schaltung mit zwei Kondensatoren enthält, welche jeweils eine in der Vorrichtung liegende Elektrode haben und die Felge (1) als Koppelelektrode nutzen.

8. Vorrichtung nach einem der Ansprüche 1 bis 5, **dadurch gekennzeichnet, dass** der Näherungssensor ein induktiver Sensor ist.

9. Vorrichtung nach einem der vorstehenden Ansprüche, **dadurch gekennzeichnet, dass** der Näherungssensor einen auf die Felge (1) ansprechenden elektrischen Schwingkreis (6) enthält.

10. Vorrichtung nach Anspruch 9, **dadurch gekennzeichnet, dass** der Schwingkreis (6) ein Colpitts-Oszillator ist.

11. Vorrichtung nach Anspruch 9 oder 10, **dadurch gekennzeichnet, dass** der Schwingkreis (6) eine Spule (L1) enthält, welche so angeordnet ist, dass sie in einer vorgegebenen Montageposition der Vorrichtung auf einer Felge (1) der Felge (1) unmittelbar benachbart ist.

12. Vorrichtung nach Anspruch 9 oder 11, **dadurch gekennzeichnet, dass** der Schwingkreis (6) auf einer Schaltungsträgerplatte (11) eine Metallschicht (in Zone 14) hat, welche so angeordnet ist, dass sie in einer vorgegebenen Montageposition der Vorrichtung auf einer Felge (1) der Felge (1) unmittelbar benachbart ist und durch die Felge (1) zu einem Kondensator ergänzt wird.

13. Vorrichtung nach Anspruch 9, 10 oder 11, **dadurch gekennzeichnet, dass** der Schwingkreis (6) auf einer Schaltungsträgerplatte (11) nebeneinander zwei Metallschichten hat, welche so angeordnet ist, dass sie in einer vorgegebenen Montageposition (in Zone 14) der Vorrichtung auf einer Felge (1) der Felge (1) unmittelbar benachbart ist und die als Koppelelektrode wirkende Felge (1) zu zwei Kondensatoren ergänzt werden.

14. Vorrichtung nach einem der Ansprüche 9 bis 13, **dadurch gekennzeichnet, dass** der Schwingkreis (6) mit einer Detektorschaltung (16) verbunden ist.

15. Vorrichtung nach Anspruch 14, **dadurch gekennzeichnet, dass** die Detektorschaltung (16) eine Frequenzmeßschaltung ist.

16. Vorrichtung nach Anspruch 14 oder 15, **dadurch gekennzeichnet, dass** die Detektorschaltung (16) ein Tiefpaßfilter oder ein Bandpaßfilter enthält.

17. Vorrichtung nach Anspruch 14, **dadurch gekennzeichnet, dass** die Detektorschaltung (16) einen vom Schwingkreis (6) gespeisten Kondensator (C3) und einen den Ladezustand des Kondensators (C3) überwachenden Schwellwertdetektor aufweist.

18. Vorrichtung nach einem der vorhergehenden Ansprüche, **dadurch gekennzeichnet, dass** der Näherungssensor einen Ausgang hat, welcher mit einem Eingang eines Funksender (8) verbunden ist.

19. Eine Felge, mit welcher eine Vorrichtung nach einem der vorstehenden Ansprüche verbunden ist.

## Claims

1. A device comprising a sensor for determining and signalling a physical value when connected to a rim (1) in a position below a pneumatic tire mounted on the rim (1),
and permitting to discover a detachment of the device from the rim,
**characterized in that** it comprises another sensor, namely a proximity sensor responsive to the rim (1).

2. The device as defined in Claim 1, **characterized in that** it comprises a proximity sensor which responds to the rim (1) in non-contact fashion.

3. The device as defined in Claim 1 or Claim 2, **characterized in that** a timing circuit is provided for supplying a signal that activates the proximity sensor at predetermined time intervals.

4. The device as defined in Claim 3, **characterized in that** means for determining the physical value comprise a second sensor and that the timing circuit supplies the activating signal simultaneously to the second sensor.

5. The device as defined in Claim 4, **characterized in that** the physical value to be determined is selected to be the air pressure or temperature prevailing in the pneumatic tire, or an acceleration value.

6. The device as defined in any of the preceding claims, **characterized in that** the proximity sensor is selected to be a capacitive sensor.

7. The device as defined in Claim 6, **characterized in that** it comprises an electric circuit having two electrodes cooperating with the rim (1) acting as a coupling electrode, whereby each of said two elctrodes forms a capacitor with the rim.

8. The device as defined in any of Claims 1 to 5, **characterized in that** the proximity sensor is selected to be an inductive sensor.

9. The device as defined in any of the preceding claims, **characterized in that** the proximity sensor comprises an electric oscillating circuit (6) responsive to the rim (1).

10. The device as defined in Claim 9, **characterized in that** the oscillating circuit (6) is a Colpitts oscillator.

11. The device as defined in Claim 9 or Claim 10, **characterized in that** the oscillating circuit (6) comprises a coil (L1) arranged in such a way that it directly neighbors the rim (1) in a predetermined mounting position of the device on the rim (1).

12. The device as defined in Claim 9 or Claim 11, **characterized in that** the oscillating circuit (6) comprises a metal layer (in zone 14) on a circuit board (11), which layer is arranged in such a way that it directly neighbors the rim (1) and is supplemented by the rim (1) to form a capacitor in a predetermined mounting position of the device on the rim (1).

13. The device as defined in Claim 9, 10 or 11, **characterized in that** the oscillating circuit (6) comprises two metal layers arranged one beside the other on a circuit board (11) which is arranged in such a manner that it directly neighbors the rim (1) in a predetermined mounting position (in zone 14) of the device on the rim (1) acting as a coupling electrode, so as to supplement the rim to form with the rim two capacitors.

14. The device as defined in Claims 9 to 13, **characterized in that** the oscillating circuit (6) is connected to a detector circuit (16).

15. The device as defined in Claim 14, **characterized in that** the detector circuit (16) is a frequency-measuring circuit.

16. The device as defined in Claim 14 or Claim 15 **characterized in that** the detector circuit (16) comprises a low-pass filter or a band-pass filter.

17. The device as defined in Claim 14, **characterized in that** the detector circuit (16) comprises a capacitor (C3), fed by the oscillating circuit (6), and a threshold-value detector that monitors the charge of the capacitor (C3).

18. The device as defined in any of the preceding claims, **characterized in that** the proximity sensor has an output which is connected to the input of a radio transmitter (8).

19. A rim to which is connected a device comprising means for detecting and signalling a physical value when connected to a rim (1) in a position below a pneumatic tire mounted on the rim (1),
and further comprising means to discover a detachment of the device from the rim
**characterized in that** it comprises a proximity sensor responsive to the rim (1).

## Revendications

1. Dispositif pour la liaison à une jante (1) à un endroit qui est situé en dessous d'un bandage pneumatique monté sur la jante (1),
qui contient un capteur pour la détermination et la signalisation d'une valeur physique et qui permet de détecter une suppression de sa liaison à la jante,
**caractérisé en ce qu'**il possède, à titre de capteur supplémentaire, un capteur de proximité sensible à la jante (1).

2. Dispositif selon la revendication 1, **caractérisé en ce qu'**il possède un capteur de proximité sensible à la jante (1) en l'absence de contact.

3. Dispositif selon les revendications 1 et 2,
**caractérisé en ce qu'**on prévoit une minuterie qui génère, à des intervalles prédéfinis dans le temps, un signal activant le capteur de proximité.

4. Dispositif selon la revendication 3, **caractérisé en ce que** la minuterie génère le signal d'activation de manière simultanée à un capteur pour déterminer la valeur physique.

5. Dispositif selon la revendication 4, **caractérisé en ce que** la valeur physique est la pression de l'air ou la température régnant dans le bandage pneumatique ou encore une accélération.

6. Dispositif selon l'une quelconque des revendications précédentes, **caractérisé en ce que** le capteur de proximité est un capteur à fonctionnement capacitif.

7. Dispositif selon la revendication 6, **caractérisé en ce qu'**il contient un circuit électrique possédant deux condensateurs qui possèdent respectivement une électrode disposée dans le dispositif et qui utilisent la jante (1) comme électrode de couplage.

8. Dispositif selon l'une quelconque des revendications 1 à 5, **caractérisé en ce que** le capteur de proximité est un capteur inductif.

9. Dispositif selon l'une quelconque des revendications précédentes, **caractérisé en ce que** le capteur de proximité contient un circuit électrique oscillant (6) répondant à la jante (1).

10. Dispositif selon la revendication 9, **caractérisé en ce que** le circuit oscillant (6) est un oscillateur Colpitt.

11. Dispositif selon la revendication 9 ou 10,
**caractérisé en ce que** le circuit oscillant (6) contient une bobine (L1) qui est disposée de telle sorte qu'elle vient se placer en position directement adjacente à la jante (1), dans une position de montage prédéfinie du dispositif sur une jante (1).

12. Dispositif selon la revendication 9 ou 11,
**caractérisé en ce que** le circuit oscillant (6), sur une plaquette de circuit imprimé (11), une couche métallique (dans la zone 14) qui est disposée de telle sorte qu'elle vient se placer en position directement adjacente à la jante (1) dans une position de montage prédéfinie du dispositif sur une jante (1), et qui est complétée par la jante (1) pour obtenir un condensateur.

13. Dispositif selon la revendication 9, 10 ou 11,
**caractérisé en ce que** le circuit oscillant (6) possède, sur une plaquette de circuit imprimé (11), deux couches métalliques côte à côte, qui sont disposées de telle sorte qu'elles viennent se placer en position directement adjacente à la jante (1) dans une position de montage prédéfinie (dans la zone 14) du dispositif sur une jante (1), et qui sont complétées, sous la forme d'une jante (1) faisant office d'électrode de couplage, pour former deux condensateurs.

14. Dispositif selon l'une quelconque des revendications 9 à 13, **caractérisé en ce que** le circuit oscillant (6) est relié à un circuit de détection (16).

15. Dispositif selon la revendication 14, **caractérisé en ce que** le circuit de détection (16) est un circuit de mesure de la fréquence.

16. Dispositif selon la revendication 14 ou 15,
**caractérisé en ce que** le circuit de détection (16) contient un filtre passe-bas ou un filtre passe-bande.

17. Dispositif selon la revendication 14, **caractérisé en ce que** le circuit de détection (16) présente un condensateur (C3) alimenté par le circuit oscillant (6) et un détecteur d'une valeur seuil qui surveille l'état de charge du condensateur (C3).

18. Dispositif selon l'une quelconque des revendications précédentes, **caractérisé en ce que** le capteur de proximité possède une sortie qui est reliée à une entrée d'un émetteur radioélectrique (8).

19. Jante à laquelle est relié un dispositif selon l'une quelconque revendications précédentes.
